# EUROPEAN PATENT SPECIFICATION

(11) **EP 0 788 744 B1**
(45) Date of publication and mention of the grant of the patent: **19.12.2001**
(21) Application number: 97100655.6
(22) Date of filing: 17.01.1997
(51) Int. Cl.: A23C 9/15, A23C 13/14, A23C 9/154, A23G 1/00

(54) **Delactosed milk and delacktosed milk powder, and foodstuffs containing the same and process therefor**
Delactosierte Milch und Milchpulver, diese enthaltende Nahrungsmittel und die entsprechendes Verfahren
Lait délactosé et lait en poudre délactosé, produits alimentaires les contenant et procédé de préparation

(30) Priority: 18.01.1996 JP 691296; 25.07.1996 JP 19668796
(43) Date of publication of application: 13.08.1997
(73) Proprietor: LOTTE CO., LTD, Shinjuku-ku Tokyo (JP)
(72) Inventor: Takemori, Toshio, Tokyo (JP); Takagi, Masahiro, Minamisaitama-gun Saitama (JP); Ito, Masanori, Saitama (JP); Kamiwaki, Tatsuya, Saitama (JP); Tsukada, Kiyoyasu, Ibaraki (JP); Yamabe, Ryohei, Saitama (JP)
(74) Representative: Reitzner, Bruno, Dr.

(56) References cited:
- EP-A- 0 195 365
- EP-A- 0 316 938
- WO-A-93/02566
- WO-A-95/04469
- GB-A- 2 084 185
- US-A- 4 675 200
- US-A- 5 456 936
- DATABASE WPI Section Ch, Week 7608 Derwent Publications Ltd., London, GB; Class D13, AN 76-14372 XP002031145 & SU 469 452 A (AM USSR NUTRITION)
- DATABASE FSTA INTERNATIONAL FOOD INFORMATION SERVICE (IFIS), FRANFURT/MAIN, DE an=94(04):p0108, J. GONZALEZ: "Preparation of lactose-free milk for nursing infants" XP002031143 & ALIMENTARIA, no. 239, 1971, pages 61-76,
- DATABASE FSTA INTERNATIONAL FOOD INFORMATION SERVICE (IFIS), FRANFURT/MAIN, DE 80(06):P1074, XP002031144 & SU 648 190 A (A. POKROVSKII)

## Description

### BACKGROUND OF THE INVENTION

The present invention relates to lactose-free milk and lactose-free milk powder which are reconstructed with milk proteins and milk fats as major components free or almost free of lactose, and to processes for producing the said lactose-free milk and lactose-free milk powder.

The lactose-free milk and lactose-free milk powder according to the present invention may be used as substitutions for processed milk, whole milk powder and skim milk powder for foodstuffs or confectioneries, such as chocolate having milk flavour, candy, biscuit and the like, ice cream, sherbet, milk coffee and milk tea. Thus, the present invention also relates to foodstuffs, namely confectioneries, beverages and ice-cream which include the lactose-free milk and lactose-free milk powder.

In the present invention, foddstuffs means confectioneries such as chocolate having milk flavour, candy and biscuit and the like, ice products, such as ice cream and sherbet, and drinks, such as milk coffee and milk tea.

Hitherto, whole milk powder and skim milk powder derived from fresh milk have been used for foodstuffs, for example, milk chocolate and ice cream simultaneously containing components from milk. In consideration of antiobesity and promotion of health, the foodstuffs are required to be low-calorie and sugar-less or sugar-free, wherein sugar-less foodstuffs mean foodstuffs in which the contents of monosaccharides and disaccharides are less than 0.5%.

However, whole milk powder and skim milk powder contain large amounts of lactose, for example, about 40% and about 50% respectively. Therefore, even if sugar derived from other materials is substituted by sugar alcohol, the resulting foodstuffs still contain considerable amounts of lactose. These commodities exist not only in Japan but also in foreign countries, although they are not sugar-less in the strict sense of word.

Processed milk and powdered milk which are lactose-free or have a small content of lactose for satisfying the definition of "sugar-less" when used for foodstuffs have never been reported. Thus, for example, in the field of chocolate, only black chocolate using sugar alcohol could satisfy the definition of "sugar-less".

Butter or casein protein may be used as substitutes for whole milk powder and skim milk powder, although they are not superior to whole milk powder and skim milk powder in taste and feeling even when they are both used for milk chocolate.

### SUMMARY OF THE INVENTION

It is therefore an object of the invention to provide novel processed milk and powdered milk, or lactose-free milk and lactose-free milk powder (which may be free or almost free of lactose) which may be used as substitutes for whole milk powder, skim milk powder, processed milk and the like; and to provide a process for producing the same. Furthermore, the present invention provides foodstuffs containing lactose-free milk and lactose-free milk powder obtained according to the invention. The foodstuffs containing the lactose-free milk and the lactose-free milk powder may satisfy the definition of sugar-less in the strict sense.

It is another object of the invention to provide foodstuffs which are not only low-calorie and sugar-less, but also have the taste and feeling of conventional foodstuffs for the promotion of health.

To achieve the foregoing objects, major components of the lactose-free milk and the lactose-free milk powder according to the present invention may comprise a protein essentially consisting of milk protein and fats essentially consisting of milk fat but not include more than 2% lactose. The lactose-free milk and lactose-free milk powder are characterized by having a structure where the fat is conjugated with the protein.

The protein which is one of major components of the lactose-free milk and the lactose-free milk powder according to the invention is preferably a milk protein derived from the fresh milk and include casein, albumin, WPC (whey protein concentrate) and the like. In proteins from fresh milk, however, the most preferable proteins are TMP (total milk proteins) and MPC (milk protein concentrate) which contain both casein and albumin rather than only casein or albumin. Proteins other than milk proteins, for example, soybean proteins may be used, although co-use with milk proteins of more than 50% and further with milk flavour are required to enhance the milky taste. Thus; the protein which is one of major components of the lactose-free milk and the lactose-free milk powder according to the present invention comprises one or more of the aforementioned protein materials and contains milk proteins from fresh milk of more than 50%.

The fat which is another major component of the lactose-free milk and the lactose-free milk powder of the present invention may preferably be of one or more milk fats from fresh milk and selected from the group of fresh cream, butter and butter oil, and may optionally include vegetable fats, although milk fats from fresh milk of more than 50% may preferably be present. When fresh cream is selected as source of the fat, very small amount of lactose may be present. When butter and/or butter oil are used, lactose may not be present. Thus, lactose-free milk and lactose-free milk powder may be produced when the butter and/or butter oil are selected as source of the fat.

In the lactose-free milk and the lactose-free milk powder, the ratio of the fat to the protein (F/P) may preferably be in the range from 0.33 to 3.0. Too much fat leads to substantially the same taste and feel as if butter only were added to the foodstuffs, and too much protein, for example, used to chocolate leads to deterioration of the feel.

Milk ash may be contained as a trace of the lactose-free milk and the lactose-free milk powder according to the present invention. The preferred milk ash is milk serum material, although another mineral materials may be used.

The lactose-free milk and the lactose-free milk powder of the present invention may also include a bulking agent of soluble dietary fiber and/or sugar alcohol as substitutes for lactose so as (i) to dry efficiently, (ii) to retain the taste, (iii) prevent the degradation of milk and (iv) to improve the feel when applied to chocolate and the like. As the bulking agent, soluble dietary fibers such as polydextrose, inulin, indigestible dextrin and the like, sugar alcohols such as lactitol, palatinit® (isomalt), maltitol, erythritol and the like or mixture thereof may be used. The bulking agent of soluble dietary fiber and/or sugar alcohol may optionally be added at a maximum weight ratio of up to 2.5 to the total amount of the protein and the fat, preferably from 0.5 to 2.5 when employed. If the content is more than 2.5, the mixing amount is unfavorably limited. If the content is less than 0.5, an effect of the addition is not obtained.

One method of obtaining the lactose-free milk of the present invention comprises steps of suspending powders of the fat and the protein which are major components in aqueous solution for homogenization and of reconstructing a structure in which the fat is conjugated with the protein for obtaining a mixture of stable O/W emulsion structure. Then, the emulsified mixture thus obtained is dried and pulverized to obtain the lactose-free milk of the present invention.

The foregoing bulking agent may be added when emulsifying the fat and protein in aqueous solution for obtaining an even more stable O/W emulsion structure. The bulking agent also has a function of performing a convenient pulverization when the lactose-free milk powder is produced. When the spray drying method is applied to the drying and powdering steps for pulverization, the bulking agent preferably contains at least polydextrose.

The foodstuffs containing the lactose-free milk and the lactose-free milk powder according to the present invention may be produced with use of the regular processes for producing the respective foodstuffs by employing the lactose-free milk and the lactose-free milk powder as substituents for skim milk, whole milk powder and processed milk.

When the lactose-free milk and the lactose-free milk powder of the present invention are used for sugar-less foodstuffs, one or more sugar alcohols selected from the group consisting of lactitol, Palatinit® (isomaltitol) and maltitol may preferably be used as a sweetener. Those sugar alcohols have an effect of enhancing the milk flavour of the foodstuffs. Furthermore, one or more compounds selected from the group consisting of the soluble dietary fiber such as polydextrose, inulin and indigestible dextrin, and sorbitol may additionally be used. The ratio of the sugar alcohol (including sorbitol when combined) to the soluble dietary fiber by weight may preferably be more than 0.5 and more preferably more than 1.

Further, when the lactose-free milk and the lactose-free milk powder according to the invention are used for sugar-less chocolate such as the low-calorie and/or low-carious sugar-less chocolates using erythritol and/or xylitol, not only the low-calorie and/or low-carious property may remain but also an improvement of sweetness may be obtained. The lactose-free milk containing the bulking agent according to the present invnetion may preferably be included with a content of more than 5% by weight.

The lactose-free milk and the lactose-free milk powder of the present invention and the process for producing the foodstuffs according to the invention are not limited to those obtainable by the material and the method described hereinbefore, but every materials possessing equivalent compositions and structures may be available within the scope of the present invention.

The lactose-free milk and the lactose-free milk powder of the present invention may be prepared by a process using
(a) a fat including one or more milk fats selected from the group consisting of fresh cream, butter and butter oil, and having a lactose content of less than 2%,
(b) a protein including one or more milk proteins selected from the group consisting of TMP (total milk protein), MPC (milk protein concentrate), casein, casein salts and WPC (whey protein concentrate) and
(c) a bulking agent consisting of soluble dietary fiber and/or sugar alcohol in a maximum weight ratio of up to 2.5 to the total solid amount of protein and fat, preferably from 0.5 to 2.5, in order to increase the stability of the O/W emulsion structure and facilitate the pulverisation in case of the lactose-free milk powder used, said bulking agent being preferably one or more soluble dietary fibers and/or sugar alcohols selected from the group consisting of polydextrose, inulin, indigestible dextrin, lactitol, maltitol, isomaltitol (Palatinit® ) and erythritol,
   which process comprises the step of:
(d) homogenizing the fat, the protein and the bulking agent, wherein the ratio between the fat and the proteing (F/P) is within the range from 0.33 to 3.0, for conjugation of the fat with the protein thereby to form a stable O/W emulsion structure;
   and in case of the lactose-free milk powder
(e) drying and powdering the mixture obtained by said homogenisation step (c), preferably by spray drying or freeze drying

The lactose-free milk and the lactose-free milk powder according to the present invention include milk ash.

The foodstuffs containing the lactose-free milk, and the lactose-free milk powder according to the present invention may be produced by conventional processes using lactose-free milk and lactose-free milk powder in place of skim milk, whole milk powder and processed milk.

### PREFERED EXAMPLES

The present invention will be described by the following Examples with reference to comparisons and contrasts. The following Examples should not be limitative, but merely illustrative of the present invention. In the Examples, the terms "%" and "parts" represent "% by weight" and "parts by weight", respectively, unless otherwise denoted particularly.

### Example 1: Lactose-free milk powder consisting of milk fat and milk protein

### (1) Lactose-free milk powder A consisting of fresh cream and milk protein

To 557 g of fresh cream of 47% fat was added 400g of water and 276 g of TMP was further added with stirring at 2000 rpm for 10 minutes by means of a homomixer and was then emulsified. The mixture was concentrated by a rotary evaporator in a hot bath at 50°C to reach 50% water, and the concentrate was freeze-dried by a freeze-dryer to obtain 520 g of the powder forming the lactose-free milk powder A.

### (2) Lactose-free milk powder A' consisting of butter oil and milk protein

To 243 g of butter oil was added 680 g of water, and 276 g of TMP was further added with stirring at 2000 rpm for 10 minutes by means of a homomixer and was then emulsified. The mixture was concentrated by a rotary evaporator in a hot bath at 50°C to reach 50% water, and the concentrate was freeze-dried by a freeze dryer to obtain 518 g of the powder forming the lactose-free milk powder A'.

### (3) Unemulsified lactose-free milk powder A consisting of butter oil and milk protein

The unemulsified lactose-free milk powder was produced by merely blending the fat and the protein without any emulsification in aqueous solution. 520 g of butter oil and 540 g of TMP were mixed and stirred by a vertical mixer at medium speed for 10 minutes to obtain 1060 g of the powder forming the unemulsified lactose-free milk powder A.

### (4) Comparison test: About a fat source for testing lactose-free milk powder and the presence of an emulsification

Chocolate was produced for trial using the lactose-free milk powders A, A' or the unemulsified lactose-free milk powder A described hereinbefore by a conventional process with the following recipe:

| | |
|---|---|
| cacao mass | 20 parts |
| milk powder | 12 parts |
| lactitol | 30 parts |
| polydextrose | 18 parts |
| cocoa butter | 19.5 parts |
| emulsifier | 0.5 parts |
| vanilla flavour | 0.1 part |
| aspartame | 0.1 part |

In the production of the chocolate using the unemulsified lactose-free milk powder A, the rolling step was carried out for three times (usually once) to obtain a maximum particle diameter of 30 micrometers since milk protein is inconvenient for pulverization and tends to form chocolate of large particle size.

Three kinds of chocolate thus produced were panel-tested by 20 persons with the following results.

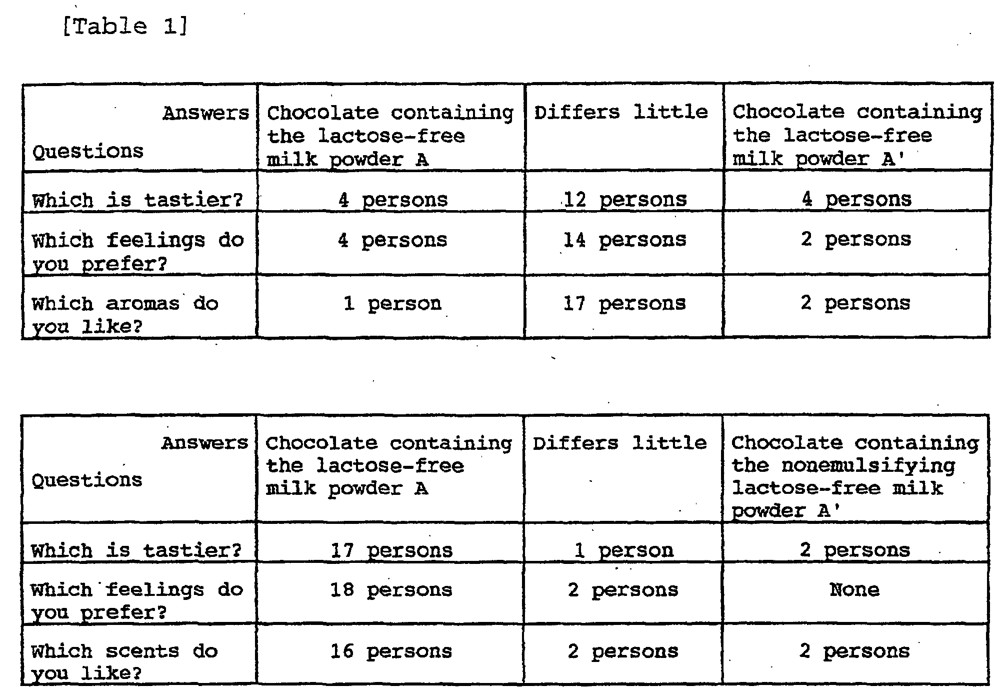

As shown in the upper part of Table 1, it appears that there was no substantial difference between tastes of the chocolates prepared for trial by using the lactose-free milk powder A and the lactose-free milk powder A'. Thus, a lactose-free milk powder of equivalent quality may be obtained even when fresh cream, butter oil, or butter obtainable by making butter oil from fresh cream is used as the fat source for the lactose-free milk powder.

As shown in the lower part of Table 1, it appears that taste, feel and flavour of the chocolate prepared with the lactose-free milk powder by emusification is superior to that of the unemulsified lactose-free milk powder. Further, in case of using the unemulsified lactose-free milk powder, three rolling steps are required with less productivity as hereinbefore described.

### Example 2 Lactose-free milk powder containing the bulking agent

### (1) Lactose-free milk powder B containing the bulking agent

To 600 g of fresh cream of 45.2% fat and 49.5% water was added 400 g of water and 10 g of the milk serum mineral salt was further added and mixed and stirred. 300 g of TMP and 450 g of polydextrose as the bulking agent were then added and the mixture was homogenized at 2000 rpm for 10 minutes by means of a homomixer to prepare the lactose-free milk powder having a stable O/W emulsion structure. Then the lactose-free milk powder was dried by a spray dryer to obtain a powder having a composition of 2.9% water, 26.3% fat, 25.2% protein and 1.5% lactose which was mostly derived from the milk serum mineral, and of others such as dextrose and ash as guessed. The powder thus obtained forms the lactose-free milk powder B.

### (2) Unemulsified lactose-free milk powder B containing the bulking agent

The unemulsified lactose-free milk powder was produced by merely blending the fat and the protein without any emulsification in aqueous solution. 260 g of butter oil of 100% fat, 260 g of TMP, 470 g of polydextrose and 10 g of the milk serum mineral salt were mixed and stirred by means of a vertical mixer at a low speed for 5 minutes and then at a medium speed for 5 minutes to obtain the powder as hereinbefore described. The composition of the powder obtained was 2.5% water, 26.1% fat, 24.2% protein and 0.3% lactose which was mostly derived from the milk serum mineral, and others like dextrose and ash as guessed. The powder forms the unemulsified lactose-free milk-powder B.

### (3) Whole milk powder

The composition of the whole milk powder used as a contrast was 2.8% water, 26.5% fat, 25.3% protein and 39.5% lactose.

### (4) Comparison test: Comparison between the lactose-free milk powder obtained through the emulsifying step, the unemulsified lactose-free milk powder and the whole milk powder

Chocolate was produced for trial by the conventional process with use of the lactose-free milk powders B, the unemulsified lactose-free milk powder B or the whole milk powder described hereinbefore with the following recipe:

| | |
|---|---|
| cacao mass | 20 % |
| milk powder | 20 % |
| lactitol | 20 % |
| maltitol | 18 % |
| cocoa butter | 20 % |
| emulsifier | 0.3 % |
| vanilla flavour | 0.1 % |
| aspartame | 0.1 % |

In the case using the unemulsified lactose-free milk powder B, the rolling step was repeated for 3 times to obtain a maximal particle diameter of 30 micrometers like the case of using the unemulsified lactose-free milk powder A as described hereinbefore since the roll-mill pulverizing efficiency was not sufficient. When the lactose-free milk powder B or the whole milk powder was used, there were some differences in the pulverizing efficiency which, however, falls within a range possible to cope by adjusting the pressure of rolling, and the single rolling step has caused no trouble.

Three kinds of chocolate thus produced were panel-tested by 50 female students of a high school with the following results.

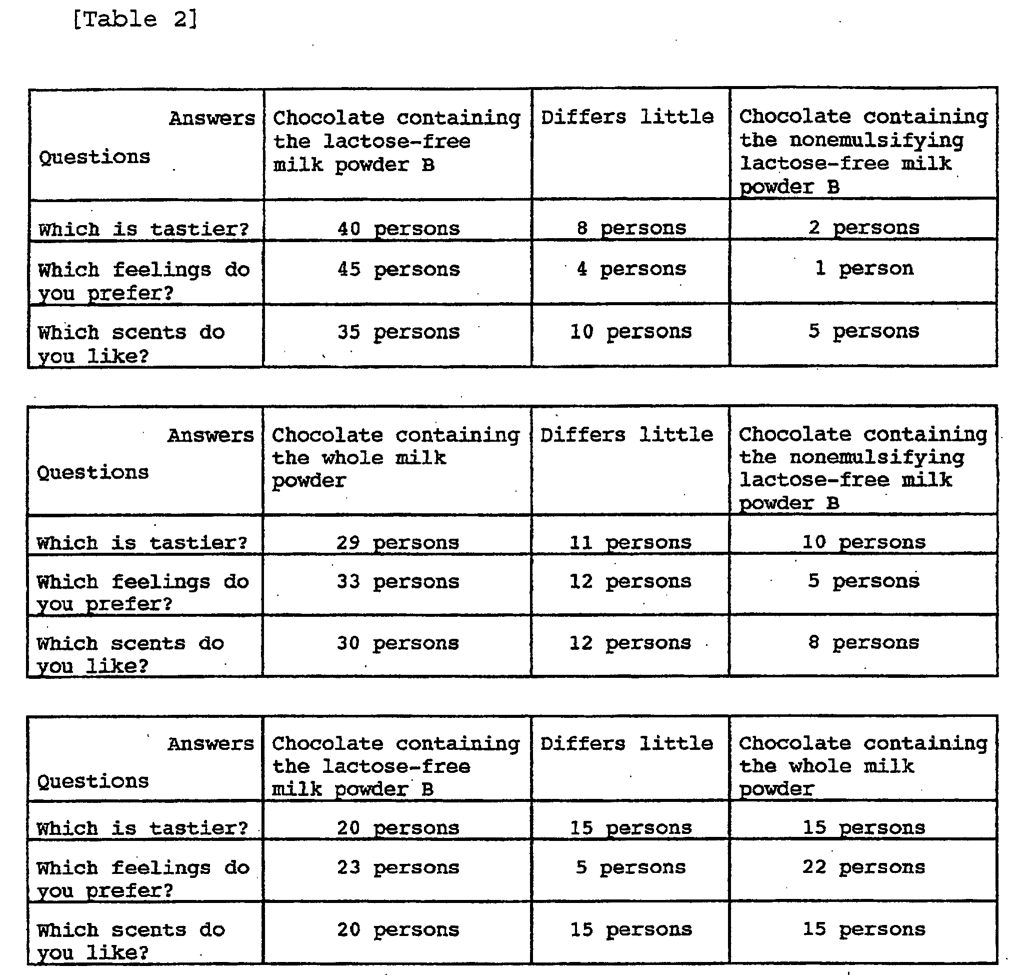

As shown in Table 2, the chocolate prepared by using the lactose-free milk powder B according to the present invention was the tastiest in all of three trial chocolates.

The chocolate of the whole milk powder had some heating smell caused by the Maillard reaction between the free amino acid from the milk protein and the reducing sugar, while that of the lactose-free milk powder B had less heating smell. It was guessed that there was a difference of palatability between the chocolates from the lactose-free milk powder B and from the whole milk powder particularly in their scent (lower column of Table 2), as the heating smell affected the scent of the chocolates.

### Example 3 White chocolate with use of the lactose-free milk powder

### (1) Lactose-free milk powder C

To 650 g of butter (80.3% fat and 16.2% water) obtained by churning and centrifuging fresh cream of 45.5% fat and 49.2% water was added 1000 g of water, and 500 g of TMP, 20 g of the milk serum mineral and 2 g of sodium citrate were also added and mixed for the emulsification under the pressure of 120 kg/cm² to prepare a lactose-free milk of stable O/W emulsion structure. Then, the lactose-free milk was dried by a spray dryer to obtain a powder having the composition of 3.2% water, 48.3% fat and 46.6% protein and forming a lactose-free milk powder C.

### (2) Whole milk powder

The whole milk powder used as a contrast had the composition of 2.8% water, 26.5% fat, 25.3% protein and 39.5% lactose.

### (3) Comparison test: Comparison of white chocolates using the lactose-free milk powder C and the whole milk powder

White chocolate was prepared for trial using the lactose-free milk powder C by the conventional process with the following recipe:

| | |
|---|---|
| milk powder | 11 parts |
| cocoa butter | 33.5 parts |
| lactitol | 24.9 parts |
| palatinit | 10 parts |
| polydextrose | 20 parts |
| emulsifier | 0.4 parts |
| vanilla flavour | 0.1 part |
| aspartame | 0.1 part |

On the other hand, another white chocolate was prepared for trial using the whole milk powder C by the conventional process with the following recipe:

| | |
|---|---|
| milk powder | 20 parts |
| cocoa butter | 33.5 parts |
| lactitol | 15.9 parts |
| palatinit | 10 parts |
| polydextrose | 20 parts |
| emulsifier | 0.4 parts |
| vanilla flavour | 0.1 part |
| aspartame | 0.1 part |

The panel-test for the two white chocolates prepared as hereinbefore described were carried out by 50 female students of a high school to obtain the following results.

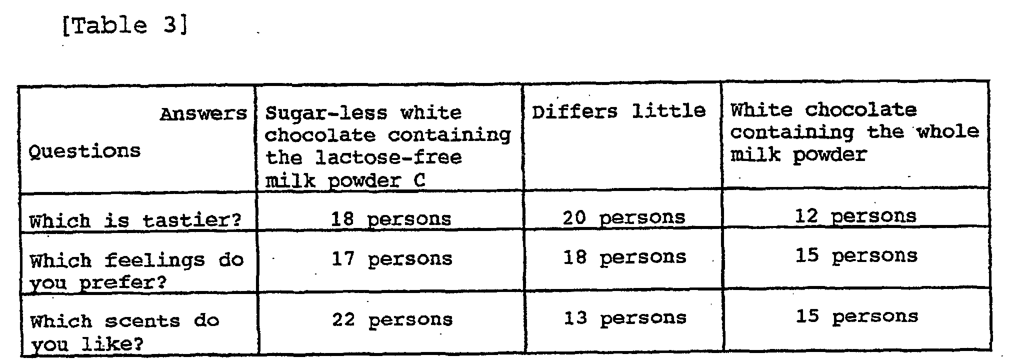

As described in Table 3, the white chocolate using the lactose-free milk powder C was equivalent or tastier than that using the whole milk powder which had a milk flavour lacking in freshness on account of the heating smell of the milk per se (such as Maillard smell, caramel smell) and the like.

On the other hand, the sugar-less white chocolate using the lactose-free milk powder C had less heating smell but provided a fresh milk taste.

The chocolate with use of sugar causes a specific body by a synergistic more favorable effect of sweetness flavour derived from sugar itself and a heating smell of the whole milk powder. The sugar-less chocolate with sugar alcohol, however, has a more or less strong cooling effect, and brings out a cool flavour of mints or citrus as well-known. Sugar alcohol incorporated with milk is used for foodstuffs to obtain a milk flavour with freshness rather than a flavour having body. Thus, in case of manufacturing sugar-less chocolate, it is preferable to use the lactose-fre milk powder prepared by the process according to the present invention in order to retain the flavour of the sugar alcohol.

### Example 4 Lactose-free milk powder containing the bulking agent

### (1) Lactose-free milk powder D

To 650 g of butter (80.3% fat and 16.2% water) obtained by churning and centrifuging fresh cream of 45.5% fat and 49.2% water was added 1000 g of water, and 500 g of TMP, 20 g of the milk serum mineral and 3 g of sodium citrate were also added and mixed for emulsification under a pressure of 150 kg/cm² to prepare a lactose-free milk having a stable O/W emulsion structure. Then, the lactose-free milk was dried by a spray dryer to obtain a powder of the composition of 2.2% water, 48.9% fat and 46.8% protein forming a lactose-free milk powder D.

### (2) Lactose-free milk powder E containing polydextrose

To 650 g of butter (80.3% fat and 16.2% water) obtained by churning and centrifuging fresh cream of 45.3% fat and 49.5% water was added 1500 g of water and 20 g of milk serum mineral was also added to the mixture. 570 g of TMP and 1230 g of polydextrose syrup were further added and carried out homogenization by a homomixer at 2000 rpm for 10 minutes to prepare a lactose-free milk powder having a stable O/W emulsion structure. Then, the lactose-free milk thus obtained was dried by a spray dryer to obtain a powder of the composition of 2.1% water, 26.2% fat, 25.1% protein and 0.3% lactose forming a lactose-free milk powder E.

### (3) Comparison test: About the presence of the polydextrose or a bulking agent in the lactose-free milk powder

The following test was carried out so as to examine the addition of polydextrose when the lactose-free milk powder is prepared.

Chocolate was prepared for trial with use of the lactose-free milk powder D by the conventional process with the following recipe:

| | |
|---|---|
| cacao mass | 23 parts |
| milk powder D | 12 parts |
| cocoa butter | 20 parts |
| lactitol | 14 parts |
| polydextrose | 20.5 parts |
| erythritol | 10 parts |
| emulsifier | 0.3 parts |
| vanilla flavour | 0.1 part |
| aspartame | 0.1 part |

In case of preparing the chocolate with use of the lactose-free milk powder D, the maximal particle size of the trial chocolate was 35 micrometers at a rolling pressure of 17 kg/cm² with rough feel. Then, the rolling pressure was elevated to 22 kg/cm² for pulverization, so that the proportion of fine particles of less than 10 micrometers was relatively increased with drop of the treating capacity of the rolling mill.

In the other hand, another chocolate was produced for trial with use of the lactose-free milk powder D by the conventional process with the following recipe:

| | |
|---|---|
| cacao mass | 23 parts |
| milk powder E | 22 parts |
| cocoa butter | 20 parts |
| lactitol | 14 parts |
| polydextrose | 10.5 parts |
| erythritol | 10 parts |
| emulsifier | 0.3 parts |
| vanilla flavour | 0.1 part |
| aspartame | 0.1 part |

In case of preparing the chocolate with use of the lactose-free milk powder W, the pulverization could be carried out at a rolling pressure of 17 kg/cm² in the rolling step.

The following table shows the rolling pressures, the treating capacity and the particle size of the trial chocolate in the rolling step for preparing chocolates in the tests.

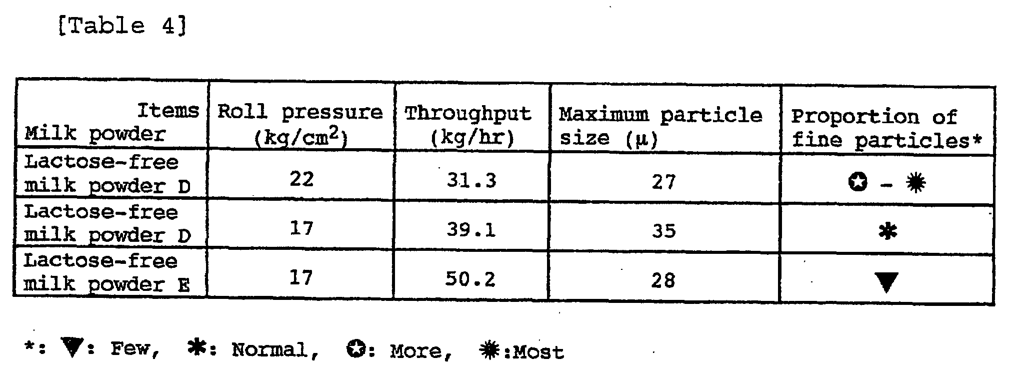

The panel-tests were carried out for the chocolates prepared with use of the lactose-free milk powder D through the rolling step at the rolling pressure of 22 kg/cm² by 50 female students of a high school with the following results.

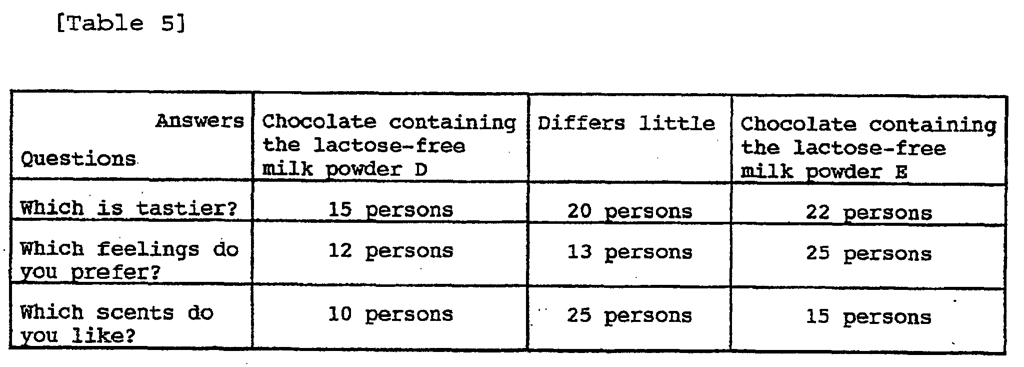

The results showed that it was preferable to add the polydextrose when the lactose-free milk powder is prepared. It was guessed that the powder of a particle structure of the poly-dextrose entangled with the protein is better tolerated than that of a particle structure comprising only the protein conjugating the fat when pulverizied.

The difference in the palatability of the feel in the panel-tests resulted from the fact that the proportion of the fine particles of less than 10 micrometers was rather greater in the chocolate prepared with use of the lactose-free milk powder D through the rolling step at the rolling pressure of 22 kg/cm² than the chocolate prepared with use of the lactose-free milk powder E through the rolling step at the rolling pressure of 17 kg/cm². When the chocolate is prepared with use of the lactose-free milk powder, the rolling pressure must be increased in order to obtain a maximal particle size of less than 30 mcirometers, resulting in an increase of the proportion of fine particles with a drop of the treating capacity of the rolling mill. The increase of the proportion of fine particles in the chocolate would lead to an increase of the viscosity of the chocolate with the unfavorable property of tardiness in the mouth. Under-this point of view, it was found preferable to use polydextrose (or a replaceable bulking agent) when the lactose-free milk powder is prepared.

### Example 5 Lactose-free milk powder containing a bulking agent in various amounts

According to the results of Example 4 as hereinbefore described, it appeared that an addition of a bulking agent such as polydextrose when the lactose-free milk powder is prepared affects to the capacity of the preparation of the chocolate but also the quality, more particularly the feel of the chocolate. An upper limit of the quantity of the bulking agent to be used for the chocolate has been examined.

### (1) Lactose-free milk powders F - K

Fresh cream of 45% fat and 49.5% water was churned and centrifuged at 2000 rpm for 10 minutes to obtain butter (80.2% fat and 15.3% water) for preparing butter oil as the raw material for the lactose-free milk powder which was then subjected to a further centrifugation.

Lactitol and polydextrose with a ratio of 1:1 were well mixed and mixed with water for 40% concentration to prepare a syrup as a bulking agent.

2400 g of water was added to 800 g of the butter oil as described hereinbefore and 800 g of TMP for sufficient mixing. Then, the syrup prepared was added in the following amounts: 0 g, 800 g, 1600 g, 2400 g, 3200 g and 4000 g for mixing and emulsifying under a pressure of 150 kg/cm², and then dried and pulverized by a spray dryer to obtain the lactose-free milk powders F, G, H, I, J and K, respectively.

### (2) Examination of the contents of the bulking agents in the lactose-free milk powders

The results of the tests about the weight of the bulking agent (a syrup of lactitol and polydextrose with a 1:1 ratio) against the total weight of the fat and the protein (E/D), conditions of pulverization with respect to the lactose-free milk powders F to K as hereinbefore described are shown in the following Table 6.

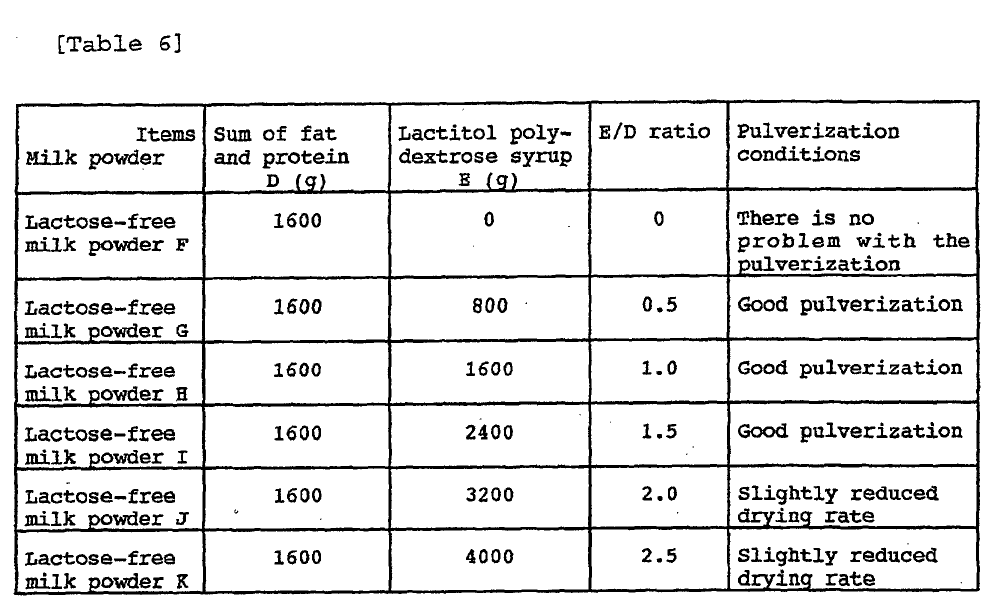

The increase of the value E results in lowering of the volatility of water in the pulverization step as shown in Table 6. When the E/D exceeds 2.5, there was no substantial influence on the quality of the chocolate even if there may be a problem of restricting the degree of compounding in the preparation of the chocolate. Preferable E/D ratio was less than 2.5.

### Example 6 Examination of ratio of the fat to the protein (F/P ratio) in the lactose-free milk powder

### (1) Lactose-free milk powders L - T

Fresh cream of 45.2% fat and 49.8% water was churned to obtain butter of 81.3% fat and 15.8% water and then the butter was centrifuged at 3000 rpm for 10 minutes to prepare butter oil of 100% fat.

3000 g of water was measured and the protein (MPC) in quantities from 300 g to 1700 g (9 grades) was added for solubilization with stirring at 500 rpm for 5 minutes. Then, a defined quantity of the butter oil as hereinbefore described was added as the fat for homogenization at 2000 rpm so that the total weight of the fat and the protein as previously added is 2000 g. Then the mixture is homogenized for 10 minutes and emulsified. Drying and pulverization with a spray dryer were then carried out to obtain nine types of the milk powders or lactose-free milk powders L, M, N, O, P, Q, S and T which were prepared by addition of 300 g, 500 g, 667 g, 800 g, 1000 g, 1200 g, 1333 g, 1500 g and 1700 g MPC, respectively.

### (2) Comparison test

Chocolates were prepared for trial with use of the lactose-free milk powders L to S prepared above (1) for examination of the influence of the ratio of the fat to protein (F/P ratio) in the lactose-free milk powder against the stability of the O/W emulsion structure, the milk flavour, the qualifications for processing and the taste of the chocolate prepared.

Chocolates were prepared for trial with use of the conventional processes with the following recipe:

| | |
|---|---|
| cacao mass | 15 % |
| milk powder | 22 % |
| palatinit | 20 % |
| maltitol | 10 % |
| erythritol | 10 % |
| inulin | 5 % |
| cocoa butter | 22.5 % |
| emulsifier | 0.3 % |
| vanilla flavour | 0.1 % |
| aspartame | 0.1 % |

The protein quantity, the fat quantity, the E/P ratio, the milk flavour of the milk powder and the taste of the chocolate product were as follows.

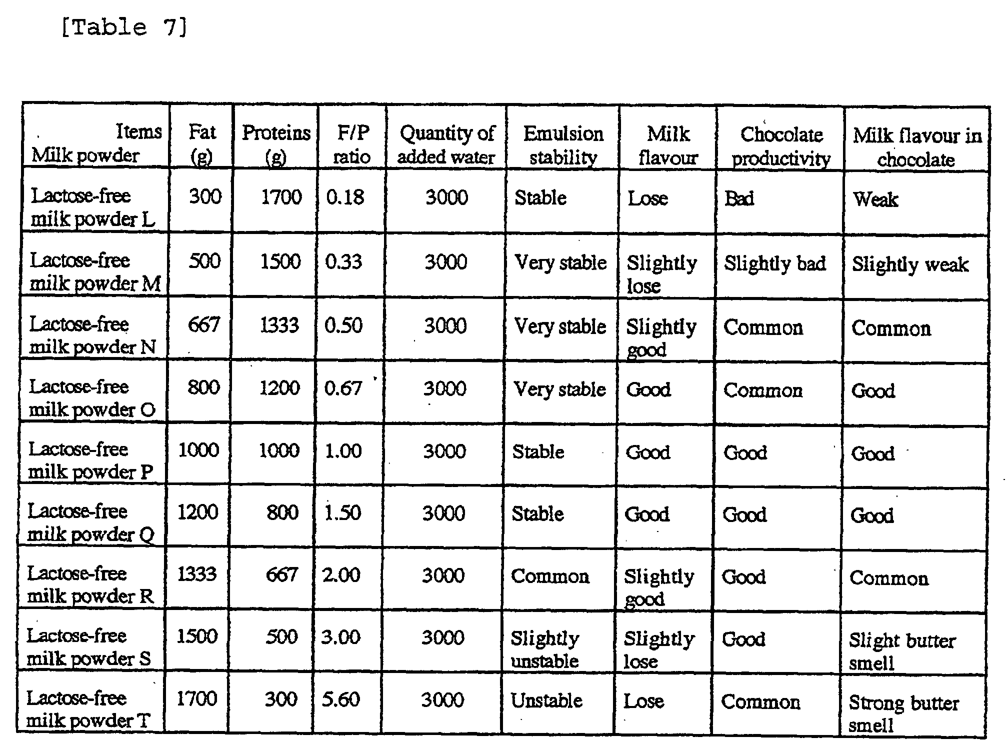

The protein contributes to stabilize the O/W emulsion structure and to keep the milk flavour with conjugation of the fat therein. It was not preferable to reduce the F/P ratio, for example, to less than 0.33 in order to increase the milk flavour since the milk flavour is mainly derived from butter. When the amount of protein is increased, then an over-load is applied to the roll in the rolling mill step resulting in a reduction in productivity and variation of the particle size with a deterioration in feel of the chocolate. In contrast, if the F/P ration is increased to, for example, over 3.0, then the amount of free fat is increased with an increase of the butter smell when the milk powder is stored whereby the milk flavour deteriorates. The butter smell becomes greater than in its fresh state, for which reason there is no longer merit of reconstructing the lactose-free milk powder. In order to preserve the milk flavour, it would be preferable that the lactose-free milk powder was prepared to obtain an optimal P/P ratio (which may be estimated near 1) before the milk fat (butter oil) is separately added in preparing a chocolate due to less off flavour of the milk powder.

Thus, it was found that the E/P ratio of the lactose-free milk powder (the lactose-free milk) is preferably in the range from 0.33 to 3.0.

### Example 7 Chocolate with use of the lactose-free milk powder containing sugar alcohol

### (1) Preparation for trial of a chocolate

Chocolates including various sugar alcohols as sweeteners were prepared for trial with use of the lactose-free milk powder E made in Example 4-2) by the conventional process with the following recipe:

| | |
|---|---|
| cacao mass | 20 % |
| lactose-free milk powder E | 20 % |
| sugar alcohols | 39.5 % |
| cocoa butter | 20 % |
| lecithin | 0.5 % |
| vanillin | adequate amount |
| aspartame | adequate amount |

The chocolates with lactitol as a sugar alcohol, palatinit, maltitol, sorbitol, xylitol, erythritol, polydextrose, inulin and indigestible dextrin form the chocolates 1 to 9, respectively.

### (2) Comparison tests: Tests with sugar alcohols in sugar-less chocolates with lactose-free milk powder

When a sugar-less chocolate is prepared with lactose-free milk powder, sugar alcohol is preferably used to enhance its milk flavour.

To exmine which sugar alcohol is preferable, evaluation tests of the chocolates containing a sugar alcohol with lactose-free milk powder E prepared in Example 4-2) as hereinbefore described were carried out by 10 panelists. The evaluation was carried out-with the 100 points full marks scoring method which judges 50 points as standard and more than 70 points as good. The results obtained are shown in the following table.

**[Table 8]**

| Chocolates | Sugar alcohol | Test items | | | | Short review |
|---|---|---|---|---|---|---|
| | | Milk impression | Sweetness | Feelings | General grade | |
| Chocolate 1 | Lactitol | 85 | 82 | 88 | 84 | The milk impression is good. |
| Chocolate 2 | Palatinit® | 78 | 75 | 62 | 70 | The milk impression is good. |
| Chocolate 3 | Maltitol | 72 | 77 | 68 | 75 | Well balanced milk impression and sweetness. |
| Chocolate 4 | Sorbitol | 42 | 55 | 60 | 62 | A cooling impression muffles the milk impression. |
| Chocolate 5 | Xylitol | 46 | 68 | 68 | 65 | Good feeling between sweetness matters. |
| Chocolate 6 | Erythritol | 38 | 58 | 70 | 55 | Taste bitter. |
| Chocolate 7 | Polydextrose | 60 | 52 | 55 | 58 | Milk impression and bad feeling. |
| Chocolate 8 | Inulin | 58 | 48 | 52 | 55 | The feeling is bad. |
| Chocolate 9 | Indigestible dextrin | 52 | 45 | 51 | 50 | The feeling is bad. |

The results of Table 8 show that the use of lactitol, palatinit and maltitol is preferable in the light of the enhancement of the milk flavour. The use of polydextrose or inulin alone causes a deterioration of feeling. It has, however, been known that the feeling was improved by co-use with a low hygroscopic sugar alcohol such as lactitol or palatinit, and it is thus preferable to use polydextrose or inulin together with them.

### Example 8 Lactose-free milk

### (1) Lactose-free milk U and lactose-free milk powder U

650 g of butter (80.3% fat and 16.2% water) obtained by churning and centrifuging fresh cream of 45.3% fat and 49.5% water was added with 1500 g of water, and 20 g of milk serum mineral was also added and mixed. 570 g of TMP and 1230 g of polydextrose syrup were further added for homogenization at 2000 rpm for 10 minutes to prepare the lactose-free milk having a stable O/W emulsion structure as lactose-free milk U. Then, a part of the lactose-free milk is collected to be dried and pulverized by a spray dryer to obtain a lactose-free milk powder U. The powder had the composition of 2.1% water, 26.2% fat, 25.1% protein and 0.3% lactose.

### (2) Sugar-less milk soft candy with use of the lactose-free milk U

Sugar-less milk soft candy with lactose-free milk U prepared above (1) as hereinbefore described was prepared with the following recipe:

| | |
|---|---|
| palatinit | 20 parts |
| maltitol | 20 parts |
| lactose-free milk U (49.7% water) | 20 parts |
| polydextrose syrup | 55 parts |
| added water | 20 parts |
| vegetable oil | 5 parts |
| emulsifier | 0.1 part |
| vanilla flavour | 0.1 part |

Palatinit, maltitol and polydextrose syrup were mixed with the added water at 70°C to be dissolved. Then, the lactose-free milk U, the vegetable oil and the emulsifier were added and mixed for uniform dispersion. The mixed solution thus obtained was then condensed under a reduced pressure to reach 7% moisture, and the flavour is added to the soft dough which is then cooled to have an appropriate hardness for bite size shaping in order to obtain a sugar-less milk soft candy.

### (3) Sugar-less milk soft candy with use of the lactose-free milk powder U

Sugar-less milk soft candy was prepared for trial with the lactose-free milk powder U prepared above (1) with the same recipe and by the same process as above (2). The lactose-free milk powder U had a reduced amount of water for substitution of the lactose-free milk above (2).

### (4) Sugar-less ice with use of the lactose-free milk U

Sugar-less ice was prepared with use of the lactose-free milk U prepared in (1) as hereinbefore described with the following recipe:

| | |
|---|---|
| salt-free butter | 12 parts |
| calcium caseinate | 2 parts |
| lactose-free milk U | 12 parts |
| maltitol | 10 parts |
| polydextrose | 5 parts |
| reduced starch syrup | 10 parts |
| stevia (high performance sweetener) | 0.05 parts |
| emulsification stabilizer | 0.5 parts |
| salt | 0.5 parts |
| vanilla flavour | 0.2 parts |
| carotenoids | adequate amount |
| water | 100 parts as a total quantity with the above composition |

Calcium caseinate, lactose-free milk U, maltitol, polydextrose, reduced starched syrup, high performance sweetener and salt were dissolved in water. Salt-free butter and the emulsification stabilizer were further added by heating to 65°C and homogenized with a homogenizer at 150 kg/cm² for forming a stable O/W emulsion structure. After disinfection at 85°C for 30 seconds and cooling to 4°C, the flavour and carotenoids were added. Then, freezing was carried out at -4.5°C with 80% of the overrun which was charged into cups for the final hardening at -18°C in order to obtain a sugar-less ice as a final product.

### (5) Sugar-less ice with use of the lactose-free milk powder U

Sugar-less ice with use of the lactose-free milk powder U was obtained by the same recipe and the process of (4) as hereinbefore described except that 6 parts of the lactose-free milk powder U prepared in (1) was used to replace the 12 parts of the lactose-free milk powder U.

### (6) : Comparison tests : comparison betwenn the products with lactose-free milk and the products with lactose-free milk powder

Panel tests were carried out with the foodstuffs prepared for trial in (2) - (5) in order to determine the difference in quality between the product with lactose-free milk and the product with lactose-free milk powder.

The sugar-less milk soft candies of (2) and (3) as herein-before described were tested by 10 panelists and the sugar-less ice-creams of (4) and (5) as hereinbefore described were tested by 12 panelists. The results are shown in the following table.

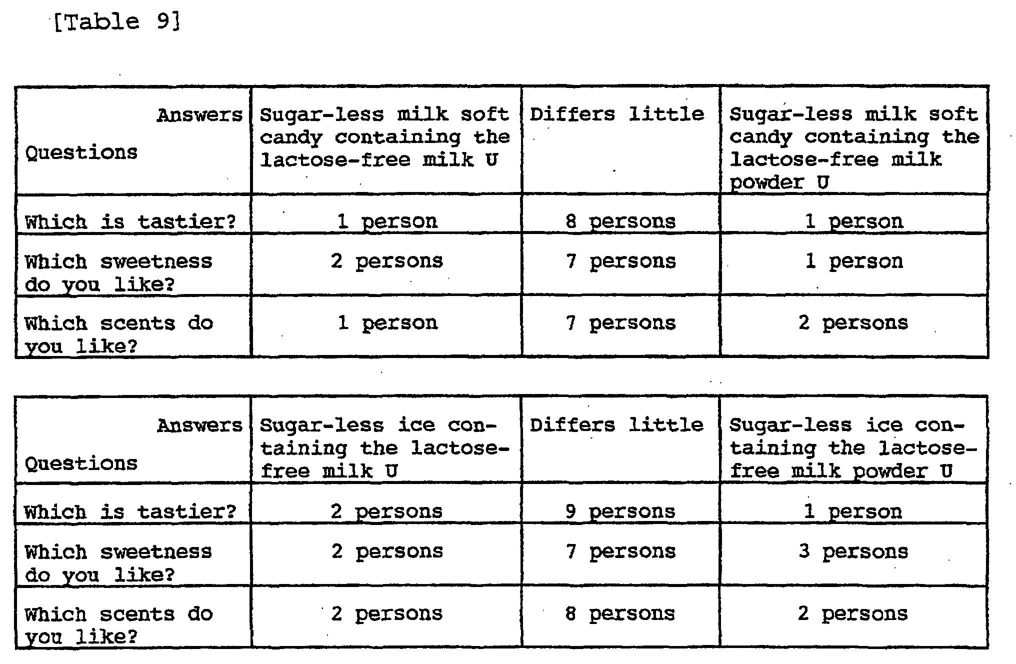

According to the results of Table 9, no difference was found in quality between the products obtained with lactose-free milk and the products obtained with lactose-free milk powder according to the present invention.

### (7) Evaluation test of quality

The sugar-less milk soft candy and the sugar-less ice-creams of (2) - (5) as hereinbefore described had a fresh milk body matching with the specific plain sweetness of sugar alcohol. With the sugar-less milk soft candies and the sugar-less ice-creams, the evaluation test was carried out with scoring by the panelists similar to the above panel tests. The results are shown in the following table.

**[Table 10]**

| Sugar-less milk soft candy | | | | | |
|---|---|---|---|---|---|
| | Very good | Good | Normal | Bad | Very bad |
| Quality of taste | 5 persons | 4 persons | 1 person | None | None |
| Quality of sweetness | 6 persons | 4 persons | None | None | None |
| Milk flavour | 5 persons | 5 persons | None | None | None |

| Sugar-less ice-cream | | | | | |
|---|---|---|---|---|---|
| | Very good | Good | Nomal | Bad | Very bad |
| Quality of taste | 6 persons | 5 persons | 1 person | None | None |
| Quality of sweetness | 5 persons | 5 persons | 2 persons | None | None |
| Milk flavour | 6 persons | 6 persons | None | None | None |
| 5 = Very good, 4 = Good, 3 = Normal 2 = Bad, 1 = Very bad | | | | | |

### Example 9 Sugar-less chocolate with lactose-free milk powder containing sugar alcohol and soluble dietary fiber

Sweeteners for a sugar-less chocolate are restricted to sugar alcohols or dietary fibers. However, problems such as (i) the rough feel of chocolate and (ii) the laxation because of stronger laxative effect occur when sugar alcohol only is used as a sweetener.

The use of the lactose-free milk and the lactose-free milk powder according to the present invention is one of effective ways to solve those problems. Co-use of a soluble dietary fiber with a sugar alcohol is also effective.

A sequential change of feeling, when the sugar alcohol was used, was due to the presence of water in the chocolate, whereby rough and large sugar alcohol paricles were formed. Thus, the degradation of feeling is prevented by reducing the quantity of the added sugar alcohol and by providing an amorphous soluble dietary fiber in order to trap the free water and to disperse the sugar alcohol particles. Although use of a vegetable oil or an emulsifying agent may be effective if feeling only is to be improved, the soluble dietary fiber is preferably used in the sugar-less chocolate to positively prevent the laxative effect.

Thus, a test was carried out to determine the weight ratio of a sugar alcohol to soluble dietary fiber (SA/SDF) which are used as sweeteners for the sugar-less chocolate.

### (1) Preparation of sugar-less chocolates with various ratios of SA/SDF

Eight types of sugar-less chocolates with the SA/SDF ratios in the range from 0.34 to 4.44 were prepared by varying the quantities of palatinit and polydextrose in recipes shown in the following table. Use was made of the lactose-free milk powder E prepared in Example 4-2) as hereinbefore described to obtain chocolates 10 - 17.

**[Table 11]**

| Chocolates | 10 | 11 | 12 | 13 | 14 | 15 | 16 | 17 |
|---|---|---|---|---|---|---|---|---|
| SA/SDF ratio | 0.34 | 0.50 | 0.69 | 1.00 | 1.05 | 2.16 | 3.26 | 4.44 |
| Cacao mass | 20 | 20 | 20 | 20 | 20 | 20 | 20 | 20 |
| Lactose-free milk powder E | 20 | 20 | 20 | 20 | 20 | 20 | 20 | 20 |
| Cocoa butter | 19.5 | 19.5 | 19.5 | 19.5 | 19.5 | 19.5 | 19.5 | 19.5 |
| Palatinit | 12.5 | 16.3 | 20.0 | 24.5 | 29.0 | 33.5 | 37.5 | 40.0 |
| Polydextrose | 27.5 | 23.7 | 20.0 | 15.5 | 11.0 | 6.5 | 2.5 | 0.0 |
| Emulsifier | 0.3 | 0.3 | 0.3 | 0.3 | 0.3 | 0.3 | 0.3 | 0.3 |
| Vanilla flavour | 0.1 | 0.1 | 0.1 | 0.1 | 0.1 | 0.1 | 0.1 | 0.1 |
| Aspartame | 0.1 | 0.1 | 0.1 | 0.1 | 0.1 | 0.1 | 0.1 | 0.1 |

### (2) Evaluation test: Examination of the SA/SDF ratios in the sugar-less chocolates

The evaluation test of the chocolates prepared for trial with the recipes as hereinbefore described was carried out with scoring (100 points of full marks scoring and standard score of 50 points) by 10 panelists. The results are shown in the following table.

**[Table 12]**

| Chocolates | SA/SDF ratio | Grades | | | |
|---|---|---|---|---|---|
| | | Milk flavour | Quality of sweetness | Feeling | Total grade |
| 10 | 0.34 | 68 | 70 | 51 | 55 |
| 11 | 0.50 | 70 | 71 | 65 | 65 |
| 12 | 0.69 | 72 | 73 | 70 | 70 |
| 13 | 1.00 | 74 | 75 | 75 | 75 |
| 14 | 1.45 | 78 | 76 | 83 | 81 |
| 15 | 2.16 | 78 | 78 | 82 | 79 |
| 16 | 3.26 | 77 | 76 | 78 | 72 |
| 17 | 4.44 | 77 | 74 | 63 | 65 |

According to the results of Table 12, it was found that the SA/SDF ratio in the sugar-less chocolate was preferably more than 0.5.

### Example 10 Application of the lactose-free milk powder for a sugar-less chocolate with low calorific value and/or low caries effect with erythritol and/or xylitol

The calorific value of erythritol is 0 kcal/g and the calorific values of other sugar alcohols are almost 2 kcal/g. Consumer's needs for low calorie sugar-less chocolate are high. Xylitol is a sugar alcohol having an anti-caries effect and consumer's needs for sugar-less chocolate having an anticaries effect with xylitol as a sugar alcohol for the prevention of caries are also great.

However, these two sugar alcohols result in pungency in the throat caused by the cooling taste together with enhancing a different taste which is disadvantageous to the taste of the chocolate.

Thus, the lactose-free milk powder according to the present invention was used in a sugar-less chocolate of low calorific value and/or low caries effect with erythritol and/or xylitol. It was found that the lactose-free milk powder has the effect of improving the disadvantageous taste of erythritol and xylitol in the chocolate. Examples are shown hereinafter.

### (1) Application of the lactose-free milk powder to a low calorie sugar-less chocolate with erythritol

Low calorie sugar-less chocolates with erythritol including respectively 0%, 5%, 10% or 15% of the lactose-free milk powder E prepared in Example 4 (2) were prepared for trial to obtain the chocolates 18 - 21, respectively.

**[Table 13]**

| Chocolates | 18 | 19 | 20 | 21 |
|---|---|---|---|---|
| Lactose-free milk powder content | 0% | 5% | 10% | 15% |
| Cacao mass | 20 | 20 | 20 | 20 |
| Lactose-free milk powder E | 0 | 5 | 10 | 15 |
| Cocoa butter | 25.0 | 24.7 | 23.4 | 22.1 |
| Erythritol | 40 | 40 | 40 | 40 |
| Emulsifier | 0.4 | 0.4 | 0.4 | 0.4 |
| Vanilla flavour | 0.1 | 0.1 | 0.1 | 0.1 |
| Palatinit | 14.45 | 10.25 | 6.05 | 2.35 |
| Aspartame | 0.05 | 0.05 | 0.05 | 0.05 |

The taste of the four types of chocolates prepared with the recipes described in Table 13 was checked by 10 panelists. The pungency in the throat and different taste were scored by comparison where the score of the chocolates with 0% lactose-free milk powder was 100 points. Thus, a lower number of points was more preferable. The results are shown in the following table.

**[Table 14]**

| Chocolates | Lactose-free milk powder content | A feeling of bite in throat | A different taste of cacao | Total grades |
|---|---|---|---|---|
| 18 | 0% | 100 | 100 | Bad |
| 19 | 5% | 61 | 62 | Normal |
| 20 | 10% | 52 | 42 | Slightly good |
| 21 | 15% | 42 | 38 | Good |

According to the results of Table 14, it was found that the pungency in the throat and the different taste of cacao in the low calorie sugar-less chocolates with erythritol were improved by using the lactose-free milk powder of the present invention, and the chocolates were improved. It was further found that when 20% cacao mass and 40% erythritol were compounded, the effect was obtained by addition of 5% lactose-free milk powder and a more remarkable effect was obtained by the addition of more than 10% lactose-free milk powder.

### (2) Application of the lactose-free milk powder for a low-caries sugar-less chocolate with xylitol

Anti-caries sugar-less chocolates with xylitol respectively containing 0%, 5%, 10% or 15% lactose-free milk powder E prepared in Example 4-2) were prepared for trial to form the chocolates 22 - 25, respectively.

**[Table 15]**

| Chocolates | 22 | 23 | 24 | 25 |
|---|---|---|---|---|
| Lactose-free milk powder content | 0% | 5% | 10% | 15% |
| Cacao mass | 20 | 20 | 20 | 20 |
| Lactose-free milk powder E | 0 | 5 | 10 | 15 |
| Cocoa butter | 25.0 | 24.7 | 23.4 | 22.1 |
| Xylitol | 40 | 40 | 40 | 40 |
| Emulsifier | 0.4 | 0.4 | 0.4 | 0.4 |
| Vanilla flavour | 0.1 | 0.1 | 0.1 | 0.1 |
| Palatinit | 14.5 | 10.3 | 6.1 | 2.4 |

Taste of the four chocolates prepared with the recipes of table 15 were checked by 10 panelists as in (1) as hereinbefore described. The results are shown in the following table.

**[Table 16]**

| Chocolates | Lactose-free milk content | A feeling of bite in throat | A different taste of cacao | Total grades |
|---|---|---|---|---|
| 22 | 0% | 100 | 100 | Bad |
| 23 | 5% | 59 | 54 | Normal |
| 24 | 10% | 47 | 40 | Slightly good |
| 25 | 15% | 38 | 35 | Good |

According to the results of Table 16, it was found that the anti-caries sugar-less chocolates with xylitol provided a more improved chocolate by using lactose-free milk powder. It was further found that when 20% cacao mass and 40% erythritol were compounded, the effect was obtained by addition of 5% lactose-free milk powder and a more remarkable effect was obtained by addition of more than 10% lactose-free milk powder.

### Example 11 Lactose-free milk powder including a fat other than milk fat and including a protein other than milk protein

In the lactose-free milk and the lactose-free milk powder of the present invention, the milk fat as a source of fat and the milk protein as a source of protein are preferably used, but to determine a substitutability of other fats and proteins, a lactose-free milk powder including a fat and a protein other than milk fat and milk protein was prepared.

### (1) Lactose-free milk powder V including cocoa butter and soybean protein

400 kg of butter oil, 200 kg of cocoa butter, 250 kg of TMP, 50 kg of sodium caseinate, 200 kg of soybean protein, 728 kg of polydextrose, 20 kg of milk ash mineral salt and 2 kg of sodium citrate were added to 2730 kg of water with stirring, and mixed and emulsified under a pressure of 120 kg/cm² to obtain a mixture having a stable emulsion structure. The mixture was dried with a spray dryer to obtain a powder forming the lactose-free milk powder V.

### (2) Unemulsified lactose-free milk powder V including cocoa butter and soybean protein

Without emulsifying the fat and the protein in the aqueous solution, blending only was used to prepare an unemulsified lactose-free milk powder. 400 kg of butter oil, 200 kg of cocoa butter, 250 kg of TMP, 50 kg of sodium caseinate, 200 kg of soybean protein, 728 kg of polydextrose, 20 kg of milk ash mineral salt and 2 kg of sodium citrate were blended to obtain a powder (unemulsified lactose-free milk powder V).

### (3) Comparison and Evaluation test: Lactose-free milk powder including a fat and a protein not derived from fresh milk

Chocolate was prepared for trial with lactose-free milk powder or the unemulsified lactose-free milk powder V as hereinbefore described by the conventional process with the following recipe:

| | |
|---|---|
| cacao mass | 16 parts |
| cocoa butter | 21.8 parts |
| milk powder | 22 parts |
| maltitol | 39.65 parts |
| emulsifier | 0.4 parts |
| milk flavour | 0.1 part |
| aspartame | 0.05 parts |

Panel tests were carried out by 10 panelists for the taste of two types of the chocolates accordingly prepared, and the following results were obtained.

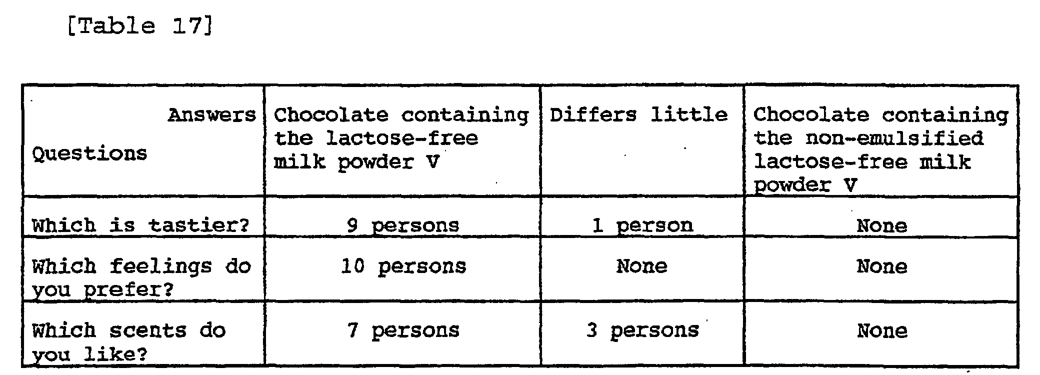

As shown in the above table, the chocolate with lactose-free milk powder V prepared by emulsification was more excellent in taste, feel and flavour. When the chocolate was prepared with the unemulsified lactose-free milk powder V, the pulverization in the rolling step was considerable inferior as compared with the preparation of a normal chocolate and of a chocolate with the lactose-free milk powder V, for which reason a difference in the feel appears.

An evaluation test of quality was carried out with the chocolates with the lactose-free milk powder V by the same 10 panelists as hereinbefore, and the results are shown in the following table.

**[Table 18]**

| | Very good | Good | Normal | Bad | Very bad |
|---|---|---|---|---|---|
| Quality of taste | 4 persons | 5 persons | 1 person | None | None |
| Quality of sweetness | 3 persons | 5 persons | 2 persons | None | None |
| Milk flavour | 4 persons | 6 persons | None | None | None |
| 5 : Very good, 4 : Good, 3: Normal 2 : Bad, 1: Very bad | | | | | |

When the soybean protein was used, a specific grassy smell of the soybean protein was observed. The grassy smell was decreased if milk protein was also used. According to Table 18, it was found that there is no problem for foodstuffs to use the lactose-free milk powder in which part of the fat and/or protein were not derived from fresh milk.

### Example 12

### (1) Biscuit with lactose-free milk

A sugar-less biscuit with lactose-free milk was prepared with the following recipe:

| | |
|---|---|
| wheat flour | 100 parts |
| lactitol | 15 parts |
| erythritol | 5 parts |
| polydextrose | 5 parts |
| shortening | 25 parts |
| egg | 10 parts |
| lactose-free milk powder U | 15 parts |
| sodium bicarbonate (inflating agent) | 1.5 parts |
| salt | 1 part |
| vanilla flavour | 0.1 part |
| stevia (high performance sweetener) | 0.15 parts |
| water | 2 parts |

Lactitol, erythritol, polydextrose, the high performance sweetener, the lactose-free milk powder U and vanilla flavour were well mixed with the shortening and dispersed for subsequent mixing of eggs, salt dissolved in water and the inflating agent. The mixture was whipped to reach 0.75 specific gravity before the flour was finally added in order to prepare a dough.

The dough was shaped arbitrarily for baking at 200°C for 12 minutes in order to obtain a sugar-less biscuit.

### (2) Biscuit with lactose-free milk powder

Sugar-less biscuits were prepared with lactose-free milk powder U by the same recipe and by the same process. The lactose-free milk powder U was added so as to be equivalent to the solid content of the lactose-free milk U, and the moisture was adjusted by increasing the amount of water.

### (3) Comparison test: Comparison of a product with lactose-free milk with a product with lactose-free milk powder

Panel tests were carried out in order to examine confectioneries (biscuits) prepared for trial by the process as hereinbefore described. The comparison test was performed by 12 panelists, and the results are shown in the following table.

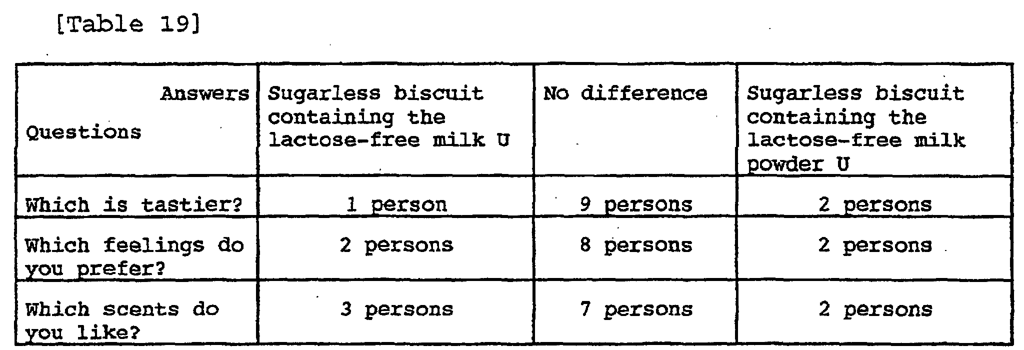

### Example 13

### (1) Sugar-less milk coffee with lactose-free milk powder

Sugar-less milk coffee with lactose-free milk powder was prepared with the following recipe:

| | |
|---|---|
| coffee extract* | 500 ml |
| erythritol | 20 g |
| maltitol | 10 g |
| high performance sweetener | 0.1 g |
| lactose-free milk powder U | 40 g |
| milk ash minerals | 2 g |
| emulsifier | 0.1 g |
| sodium caseinate | 0.5 g |
| total (with addition of water) | 1000 ml |
| Coffee extract*: roast coffee beans were pulverized, and extracted with 600 ml of hot water before adjusting to pH 6.5 with sodium bicarbonate. | |

Erythritol, maltitol, high performance sweetener, the lactose-free milk powder U and milk ash minerals were added to 500 ml of hot water at 70°C and well mixed, and the emulsifier and sodium caseinate were further added with good stirring and mixed. 500 ml of the coffee extract obtained by extraction of coffee beans with hot water was added to form the sugar-less milk coffee.

### (2) Sugar-less milk coffee with lactose-free milk

Sugar-less milk coffee with lactose-free milk powder U was prepared with the same recipe and by the same process. The lactose-free milk powder U was added so as to be equivalent to the solid content of the lactose-free milk powder U so that the total amount of coffee liquid is 1000 ml.

### (3) Comparison test: Comparison of a product with lactose-free milk with a product with lactose-free milk powder

Panel tests were carried out with drinks (coffee) prepared for trial by the process as hereinbefore described.

The comparison test was performed by 10 panelists, and the results obtained are shown in the following table.

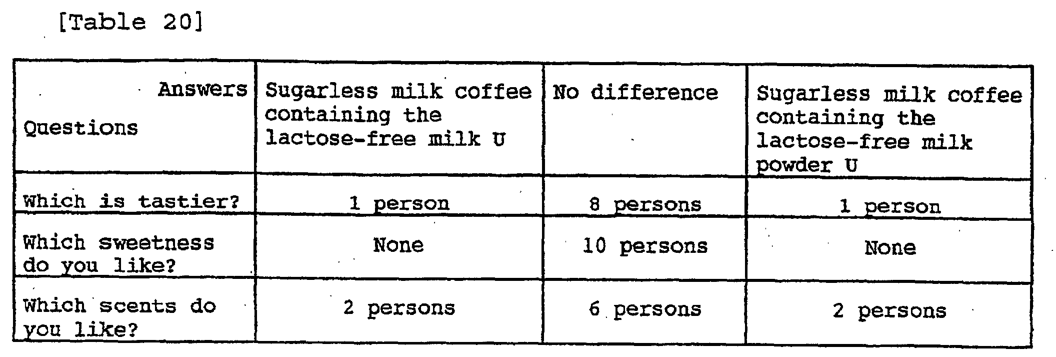

From the above results and the results with the candies and the ice-cream as hereinbefore described, it was found that there is no difference in quality of the products (confectionery, ice-cream and drinks) between the lactose-free milk and the lactose-free milk powder according to the present invention.

### (4) Evaluation test of quality:

For sugar-less biscuits and sugar-less coffee, sugar alcohols were used to obtain a taste of plain sweetness which is slightly different from that of sugar. With the sugar-less biscuits and the sugar-less milk coffee, the evaluation tests were carried out by the same panelists as hereinbefore.

**[Table 21]**

| Sugarless biscuit | | | | | |
|---|---|---|---|---|---|
| | Very good | Good | Normal | Bad | Very bad |
| Quality of whole taste | 6 persons | 5 persons | 1 person | None | None |
| Quality of sweetness | 4 persons | 7 persons | None | None | None |
| Milk flavor | 2 persons | 5 persons | 5 persons | None | None |

| Sugarless milk coffee | | | | | |
|---|---|---|---|---|---|
| | Very good | Good | Normal | Bad | Very bad |
| Quality of whole taste | 6 persons | 6 persons | None | None | None |
| Quality of sweetness | 4 persons | 4 persons | 2 persons | None | None |
| Milk flavor | 7 persons | 3 persons | None | None | None |
| 5: Very good, 4: Good, 3: Normal, 2: Bad, 1: Very bad | | | | | |

### Example 14

### (1) Biscuits with lactose-free milk powder

Sugar-less biscuits with lactose-free milk powder were prepared for trial with the following recipe:

| | |
|---|---|
| wheat flour | 100 parts |
| lactitol | 15 parts |
| erythritol | 5 parts |
| polydextrose | 5 parts |
| shortening | 30 parts |
| egg | 10 parts |
| lactose-free milk powder | 10 parts |
| inflating agent | 1.5 parts |
| salt | 1 part |
| vanilla flavour | 0.1 part |
| high performance sweetener | 0.15 parts |
| water | 5 parts |

Lactitol, erythritol, polydextrose, the high performance sweetener, the lactose-free milk powder and the flavour were well mixed with the shortening and dispersed to be subsequently well mixed with egg, salt dissolved in water and the inflating agent. The mixture was whipped at a high speed with the mixer to reach 0.75 specific gravity before the flour was finally added in order to prepare a dough.

The dough was shaped arbitrarily for baking at 200°C for 12 minutes in order to obtain sugar-less biscuits.

(2) Comparison 1: Biscuits were prepared with the same recipe and by the same process as in Example 14 except using a regular whole milk powder in place of the lactose-free milk powder.

(3) Comparison 2: Biscuits were made with the same recipe and by the same process as in Example 14, except using in place of 10 parts of the lactose-free milk powder, 2.8 parts of extracted milk protein, 2.6 parts of butter oil, 3.6 parts of polydextrose and 0.5 part of whey minerals.

(4) Evaluation of sensory test: Evaluation of sensory tests were carried out with samples of Example 14, Comparisons 1 and 2 by 15 panelists.

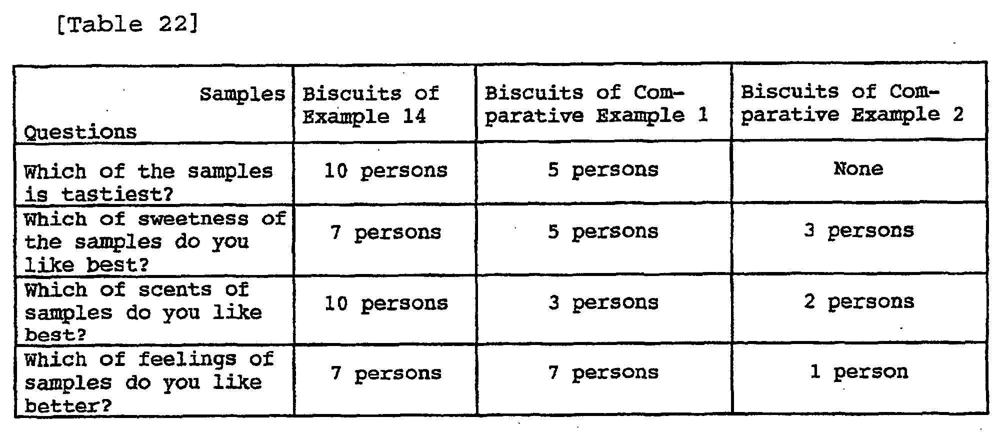

As results of the sensory tests, there was no difference between the biscuits of Example 14 and Comparison 1, but the biscuits of Comparison test 2 were inferior in hardness and roughness of taste.

Regarding flavour, the biscuits of Example 14 received the best evaluation and the sweetness of the sweetener used was adjusted to obtain the plain milk flavour. For Comparison 1, the heating smell of milk and the sweetness of the sweetener used were unbalanced and for Comparison 2, whole flavour was insufficient while the greasiness of butter was emphasized in the biscuit and thus both biscuits had an unsuitable and unpreferable taste.

### Example of sugar-less coffee

### Reference 1

| | |
|---|---|
| coffee extract | 500 ml |
| erythritol | 20 g |
| maltitol | 10 g |
| stevia | 0.1 g |
| whole milk powder | 20 g |
| whey minerals | 2 g |
| emulsifier | 0.5 g |
| sodium caseinate | 0.5 g |
| total (with addition of water) | 1000 ml |

Whole milk powder, whey minerals, the emulsifier and sodium caseinate were added to 300 ml of hot water at 70°C for mixing. After the addition of erythritol, maltitol and stevia, 500 ml of coffee extract was added. Then, the pH was adjusted to 6.9 with sodium bicarbonate and water was added to 1000 ml to form a coffee drink (1).

### Example 15

| | |
|---|---|
| coffee extract | 500 ml |
| erythritol | 20 g |
| maltitol | 10 g |
| stevia | 0.1 g |
| de-lactose milk powder U | 20 g |
| whey minerals | 2 g |
| emulsifier | 0.5 g |
| sodium caseinate | 0.5 g |
| total (with addition of water) | 1000 ml |

The lactose-free milk powder U, whey minerals, the emulsifier and sodium caseinate were added to 300 ml of hot water at 70°C for mixing. After the addition of erythritol, maltitol and stevia, 500 ml of coffee extract was added. The the pH was adjusted to 6.9 with sodium bicarbonate and water was added to 1000 ml to form a coffee drink (2).

### Reference 2

| | |
|---|---|
| coffee extract | 500 ml |
| erythritol | 20 g |
| maltitol | 10 g |
| stevia | 0.1 g |
| whole protein | 5 g |
| butter | 5 g |
| reites | 10 g |
| whey minerals | 2 g |
| emulsifier | 0.5 g |
| sodium caseinate | 0.5 g |
| total (with addition of water) | 1000 ml |

The milk protein, butter, reites, whey minerals, the emulsifier and sodium caseinate were added to 300 ml of hot water at 70°C for mixing. After the addition of erythritol, maltitol and stevia, 500 ml of coffee extract was added. The pH was adjusted to 6.9 with sodium bicarbonate and water was added to 1000 ml to form a coffee drink (3).

### Results of investigation for acceptability:

Acceptability investigation was carried out with the coffee drinks (1), (2) and (3) prepared in the Examples. Panelists were 20 male and female who favor coffee, and the coffee drinks (1), (2) and (3) were ranked from first to third according to the panelist's preference and scored 5 points, 3 points and 1 point from first to third, respectively. The total points for the drinks were shown in the following table.

**[Table 23]**

| | Coffee drinks 1 | Coffee drinks 2 | Coffee drinks 3 |
|---|---|---|---|
| Merit of scent | 62 marks | 62 marks | 56 marks |
| Coffee flavor | 54 marks | 72 marks | 54 marks |
| Milk flavor | 66 marks | 84 marks | 30 marks |
| Total grades | 66 marks | 82 marks | 32 marks |

### Chronological stability:

The coffee drinks (1), (2) and (3) were heated at 60°C and then homogenized at 150 kg/cm² for bottling at 80°C before retort-disinfection was carried out at 121°C for 20 minutes, for observation of the chronological stability of the drinks at room temperature. As a result, it was found that although the drinks (1), (2) and (3) were stable immediately after the retort-disinfection, after three days a ring of milk fat was observed on top of the drink (3) to demonstrate that the drink (3) lost its stability. It was also found that the coffee drinks (1) and (2) were more stable than the drink (3) and the drinks (1) and (2) have remained unchanged in stability even . after two weeks.

## Claims

1. Process for preparing a lactose-free milk using
(a) a fat including one or more milk fats selected from the group consisting of fresh cream, butter and butter oil, and having a lactose content of less than 2%,
(b) a protein including one or more milk proteins selected from the group consisting of TMP (total milk protein), MPC (milk protein concentrate), casein, casein salts and WPC (whey protein concentrate), and
(c) a bulking agent consisting of soluble dietary fiber and/or sugar alcohol in a maximum weight ratio of up to 2.5 to the total solid amount of protein and fat, said bulking agent being preferably one or more soluble dietary fibers and/or sugar alcohols selected from the group consisting of polydextrose, inulin, indigestible dextrin, lactitol, maltitol, isomaltitol and erythritol,
which comprises the step of:
(d) homogenizing the fat, the protein and the bulking agent in aqueous solution, wherein the ratio between fat and protein (F/P) is within the range from 0.33 to 3.0, for conjugation of the fat with the protein thereby to form a stable O/W emulsion structure.

2. Process for preparing a lactose-free milk powder using
(a) a fat including one or more milk fats selected from the group consisting of fresh cream, butter and butter oil, and having a lactose content of less than 2%,
(b) a protein including one or more milk proteins selected from the group consisting of TMP (total milk protein), MPC (milk protein concentrate), casein, casein salts and WPC (whey protein concentrate), and
(c) a bulking agent consisting of soluble dietary fiber and/or sugar alcohol in a maximum weight ratio of up to 2.5 to the total solid amount of protein and fat, said bulking agent being preferably one or more soluble dietary fibers and/or sugar alcohols selected from the group consisting of polydextrose, inulin, indigestible dextrin, lactitol, maltitol, isomaltitol and erythritol,
which comprises the steps of:
(d) homogenizing the fat, the protein and the bulking agent in aqueous solution, wherein the ratio between fat and protein (F/P) is within the range from 0.33 to 3.0, for conjugation of the fat with the protein thereby to form a stable O/W emulsion structure; and
(e) drying and powdering the mixture obtained by said homogenization step.

3. Lactose-free milk, which comprises:
(a) a fat including one or more milk fats selected from the group consisting of fresh cream, butter and butter oil, and having a lactose content of less than 2%,
(b) a protein including one or more milk proteins selected from the group consisting of TMP (total milk protein), MPC (milk protein concentrate), casein, casein salts and WPC (whey protein concentrate), and
(c) a bulking agent consisting of soluble dietary fiber and/or sugar alcohol in a maximum weight ratio of up to 2.5 to the total solid amount of protein and fat, said bulking agent being preferably one or more soluble dietary fibers and/or sugar alcohols selected from the group consisting of polydextrose, inulin, indigestible dextrin, lactitol, maltitol, isomaltitol and erythritol,
wherein the ratio between the fat and the protein (F/P) is within the range from 0.33 to 3.0, and the fat is conjugated with the protein.

4. Lactose-free milk according to claim 3 wherein said lactose-free milk is in the form of powder.

5. Foodstuffs with use of lactose-free milk and/or lactose-free milk powder comprising:
(a) a fat including one or more milk fats selected from the group consisting of fresh cream, butter and butter oil, and having a lactose content of less than 2%;
(b) a protein including one or more milk proteins selected from the group consisting of TMP, MPC, casein, casein salts and WPC; and
(c) a bulking agent of soluble dietary fiber and/or sugar alcohol in a maximum weight ratio of up to 2.5 to the total solid amount of the fat and the protein, said bulking agent comprising one or more dietary fibers and/or sugar alcohols selected from the group consisting of polydextrose, inulin, indigestible dextrin, lactitol, maltitol, isomaltitol and erythritol,
wherein a ratio between the fat and the protein (F/P) is within the range from 0.33 to 3.0, and the fat is conjugated with the protein.

6. Foodstuffs according to claim 5, wherein said foodstuffs are sugar-less.

7. Foodstuffs according to claim 5 or 6, wherein said foodstuffs are chocolate, preferably milk chocolate.

8. Foodstuffs according to claim 5, wherein said foodstuffs are sugar-less milk chocolate which contains as sweetener one or more sugar alcohols selected from the group consisting of lactitol, isomaltitol and maltitol, and wherein preferably said foodstuffs contain one or more compounds selected from the group consisting of polydextrose, inulin, indigestible dextrin and sorbitol.

9. Sugar-less chocolate with use of lactose-free milk and/or lactose-free milk powder containing erythritol and/or xylitol, comprising:
(a) a fat including one or more milk fats selected from the group of fresh cream, butter and butter oil, and having a lactose content of less than 2%; and
(b) a protein including one or more milk proteins selected from the group of TMP, MPC, casein, casein salts and WPC,
wherein the ratio between the fat and the protein (F/P) is within the range from 0.33 to 3.0, and the fat is conjugated with the protein.

10. Sugar-less chocolate according to claim 9, wherein said lactose-free milk and/or lactose-free milk powder further contains a bulking agent of soluble dietary fiber and/or sugar alcohol in a maximum weight ratio of up to 2.5 to the total solid amount of the fat and the protein, said bulking agent preferably comprising one or more soluble dietary fibers and/or sugar alcohols selected from the group consisting of polydextrose, inulin, indigestible dextrin, lactitol, maltitol, isomaltitol and erythritol.

11. Lactose-free milk, which comprises:
(a) a fat including one or more milk fats selected from the group consisting of fresh cream, butter and butter oil, and having a lactose content of less than 2%;
(b) a protein including one or more milk proteins selected from the group of TMP, MPC, casein, casein salts and WPC; and
(c) a bulking agent of soluble dietary fiber and/or sugar alcohol in a maximum weight ratio of up to 2.5 to the total solid amount of the fat and the protein, said bulking agent preferably comprising one or more soluble dietary fibers and/or sugar alcohols selected from the group consisting of polydextrose, inulin, indigestible dextrin, lactitol, maltitol, isomaltitol and erythritol,
wherein the ratio between the fat and the protein (F/P) is within the range from 0.33 to 3.0, and said fat and protein are homogenized in aqueous solution and further the fat is conjugated with the protein thereby to form a stable O/W emulsion structure.

12. Lactose-free milk according to claim 11 wherein said lactose-free milk is in the form of powder.

13. Foodstuffs with use of lactose-free milk and/or lactose-free milk powder, comprising:
(a) a fat including one or more milk fats selected from the group consisting of fresh cream, butter and butter oil, and having a lactose content of less than 2%;
(b) a protein including one or more milk proteins selected from the group of TMP, MPC, casein, casein salts and WPC; and
(c) a bulking agent of soluble dietary fiber and/or sugar alcohol in a maximum weight ratio of up to 2.5 to the total solid amount of the fat and the protein, said bulking agent preferably comprising one or more soluble dietary fibers and/or sugar alcohols selected from the group consisting of polydextrose, inulin, indigestible dextrin, lactitol, maltitol, isomaltitol and erythritol,
wherein the ratio between the fat and the protein (F/P) is within the range from 0.33 to 3.0, and said fat and protein are homogenized in aqueous solution and further the fat is conjugated with the protein thereby to form a stable O/W emulsion structure.

14. Foodstuffs according to claim 13, wherein the foodstuffs are sugar-less.

## Patentansprüche

1. Verfahren zur Herstellung einer lactosefreien Milch unter Verwendung
(a) eines Fetts, welches ein oder mehrere Milchfette, ausgewählt aus der Gruppe, bestehend aus frischer Sahne, Butter und Butteröl, enthält, und einen Lactosegehalt von weniger als 2% hat,
(b) eines Proteins, das ein oder mehrere Milchproteine, ausgewählt aus der Gruppe, bestehend aus TMP (Gesamtmilchprotein) MPC (Milchproteinkonzentrat), Casein, Caseinsalzen und WPC (Molkeproteinkonzentrat), enthält, und
(c) eines Füllmittels (bulking agent) aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise ein oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit enthält,
welches folgende Schritte umfasst:
(d) Homogenisieren des Fetts, des Proteins und des Füllmittels in wässriger Lösung, wobei das Verhältnis zwischen Fett und Protein (F/P) im Bereich von 0,33 bis 3,0 liegt, zur Bindung des Fetts mit dem Protein, um auf diese Weise eine stabile O/W-Emulsionsstruktur zu bilden.

2. Verfahren zur Herstellung eines lactosefreien Milchpulvers unter Verwendung
(a) eines Fetts, welches ein oder mehrere Milchfette, ausgewählt aus der Gruppe, bestehend aus frischer Sahne, Butter und Butteröl, enthält, und einen Lactosegehalt von weniger als 2% hat,
(b) eines Proteins, das ein oder mehrere Milchproteine, ausgewählt aus der Gruppe, bestehend aus TMP (Gesamtmilchprotein), MPC (Milchproteinkonzentrat), Casein, Caseinsalzen und WPC (Molkeproteinkonzentrat), enthält, und
(c) eines Füllmittels (bulking agent) aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise ein oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit darstellt,
welches folgende Schritte umfasst:
(d) Homogenisieren des Fetts, des Proteins und des Füllmittels in wässriger Lösung, wobei das Verhältnis zwischen Fett und Protein (F/P) im Bereich von 0,33 bis 3,0 liegt, zur Bindung des Fetts mit dem Protein, um auf diese Weise eine stabile O/W-Emulsionsstruktur zu bilden.
(e) Trocknen und Pulverisieren des durch diesen Homogenisierungsschritt erhaltenen Gemisches.

3. Lactosefreie Milch, welche enthält
(a) ein Fett, welches ein oder mehrere Milchfette, ausgewählt aus der Gruppe, bestehend aus frischer Sahne, Butter und Butteröl, enthält, und einen Lactosegehalt von weniger als 2% hat,
(b) ein Protein, das ein oder mehrere Milchproteine, ausgewählt aus der Gruppe, bestehend aus TMP (Gesamtmilchprotein), MPC (Milchproteinkonzentrat), Casein, Caseinsalzen und WPC (Molkeproteinkonzentrat), enthält, und
(c) ein Füllmittel (bulking agent) aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise eine oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit, darstellt,
worin das Verhältnis zwischen Fett und Protein (F/P) im Bereich von 0,33 bis 3,0 liegt und das Fett mit dem Protein gebunden ist.

4. Lactosefreie Milch nach Anspruch 3, worin die lactosefreie Milch in Pulverform vorliegt.

5. Lebensmittel unter Verwendung von lactosefreier Milch und/oder lactosefreiem Milchpulver, enthaltend:
(a) ein Fett, welches ein oder mehrere Milchfette, ausgewählt aus der Gruppe, bestehend aus frischer Sahne, Butter und Butteröl, enthält, und einen Lactosegehalt von weniger als 2% hat,
(b) ein Protein, das ein oder mehrere Milchproteine, ausgewählt aus der Gruppe, bestehend aus TMP, MPC, Casein, Caseinsalzen und WPC, enthält, und
(c) ein Füllmittel (bulking agent) aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise ein oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit, darstellt,
worin das Verhältnis zwischen Fett und Protein (F/P) im Bereich von 0,33 bis 3,0 liegt und das Fett mit dem Protein gebunden ist.

6. Lebensmittel nach Anspruch 5, worin diese zuckerfrei sind.

7. Lebensmittel nach Anspruch 5 oder 6, worin diese Schokolade, vorzugsweise Milchschokolade, darstellen.

8. Lebensmittel nach Anspruch 5, worin diese zuckerfreie Milchschokolade darstellen, die als Süßungsmittel einen oder mehrere Zuckeralkohole, ausgewählt aus der Gruppe, bestehend aus Lactit, Isomaltit und Maltit, enthält, und worin die Lebensmittel vorzugsweise eine oder mehrere Verbindungen, ausgewählt aus der Gruppe, bestehend aus Polydextrose, Inulin, unverdaulichem Dextrin und Sorbit, enthalten.

9. Zuckerfreie Schokolade unter Verwendung von lactosefreier Milch und/oder lactosefreiem Milchpulver, enthaltend Erythrit und/oder Xylit, enthaltend
(a) ein Fett, welches ein oder mehrere Milchfette, ausgewählt aus der Gruppe frische Sahne, Butter und Butteröl enthält, und einen Lactosegehalt von weniger als 2% hat,
(b) ein Protein, das ein oder mehrere Milchproteine, ausgewählt aus der Gruppe TMP, MPC, Casein, Caseinsalzen und WPC enthält,
worin das Verhältnis zwischen Fett und Protein (F/P) im Bereich von 0,33 bis 3,0 liegt und das Fett mit dem Protein gebunden ist.

10. Zuckerfreie Schokolade nach Anspruch 9,worin die lactosefreie Milch und/oder das lactosefreie Milchpulver zusätzlich ein Füllmittel aus löslicher Diätfaser und/oder Zuckeralkohol in einem maximalen Verhältnis von bis zu 2,5 zur Gesamtmenge an festem Fett und Protein enthält, wobei das Füllmittel vorzugsweise ein oder mehrere Diätfasern und/oder Zuckeralkohole in einem maximalen Gewichtsverhältnis von bis zu 2,5 zur Gesamtmenge an festem Protein und Fett enthält, wobei das Füllmittel vorzugsweise eine oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit enthält.

11. Lactosefreie Milch, enthaltend
(a) ein Fett, welches ein oder mehrere Milchfette, ausgewählt aus der Gruppe, bestehend aus frischer Sahne, Butter und Butteröl, enthält, und einen Lactosegehalt von weniger als 2% hat,
(b) ein Protein, das ein oder mehrere Milchproteine, ausgewählt aus der Gruppe TMP, MPC, Casein, Caseinsalzen und WPC enthält, und
(c) ein Füllmittel aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise ein oder mehrere lösliche Diätfasern und/oder Zuckeralkohole, ausgewählt aus der Gruppe bestehend aus Polydextrose, Inulin, unverdaulichem Dextrin, Lactit, Maltit, Isomaltit und Erythrit, enthält,
worin das Verhältnis zwischen Fett und Protein (F/P) im Bereich von 0,33 bis 3,0 liegt, worin das Fett und das Protein in wässriger Lösung homogenisiert sind und worin das Fett weiterhin mit dem Protein gebunden ist, um auf diese Weise eine stabile O/W-Emulsionsstruktur zu bilden.

12. Lactosefreie Milch nach Anspruch 11, worin diese in Pulverform vorliegt.

13. Lebensmittel unter Verwendung von lactosefreier Milch und/oder lactosefreiem Milchpulver enthaltend
(a) ein Fett, welches ein oder mehrere Milchfette, ausgewählt aus der Gruppe, bestehend aus frischer Sahne, Butter und Butteröl, enthält, und einen Lactosegehalt von weniger als 2% hat,
(b) ein Protein, das ein oder mehrere Milchproteine, ausgewählt aus der Gruppe, bestehend aus TMP, MPC, Casein, Caseinsalzen und WPC, enthält, und
(c) ein Füllmittel aus löslicher Diätfaser und/oder Zuckeralkohol in einem maximalen Gewichtsverhältnis von bis zu 2,5 zur Gesamtmenge an festem Protein und Fett, wobei das Füllmittel vorzugsweise ein oder mehrere lösliche Diätfasern und/oder Zuckeralkohole, ausgewählt aus der Gruppe, bestehend aus Polydextrose, Inulin, unverdaulichem Dextrin, Lactit, Maltit, Isomaltit und Erythrit, enthält,
worin das Verhältnis zwischen Fett und Protein (F/P) im Bereich von 0,33 bis 3,0 liegt, worin das Fett und das Protein in wässriger Lösung homogenisiert sind und worin das Fett weiterhin mit dem Protein gebunden ist, um auf diese Weise eine stabile O/W-Emulsionsstruktur zu bilden.

14. Lebensmittel nach Anspruch 13, worin diese zuckerfrei sind.

## Revendications

1. Procédé de préparation d'un lait délactosé, qui utilise
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP (protéine totale du lait), le MPC (concentré de protéine du lait), la caséine, les sels de caséine et le WPC (concentré de protéine du sérum), et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
qui comprend l'étape
(d) d'homogénéisation de la matière grasse, de la protéine et de l'agent de charge dans une solution aqueuse, où le rapport entre la matière grasse et la protéine (F/P) est compris entre 0,33 et 3,0, pour conjugaison de la matière grasse avec la protéine, de façon à former une structure d'émulsion stable de type aqueux.

2. Procédé de préparation d'un lait délactosé, qui utilise
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP (protéine totale du lait), le MPC (concentré de protéine du lait), la caséine, les sels de caséine et le WPC (concentré de protéine du sérum), et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
qui comprend les étapes :
(d) d'homogénéisation de la matière grasse, de la protéine et de l'agent de charge dans une solution aqueuse, où le rapport entre la matière grasse et la protéine (F/P) est compris entre 0,33 et 3,0, pour conjugaison de la matière grasse avec la protéine, de façon à former une structure d'émulsion stable de type aqueux ;
(e) de séchage et de pulvérisation du mélange obtenu par ladite étape d'homogénéisation.

3. Lait délactosé, qui comprend :
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP (protéine totale du lait), le MPC (concentré de protéine du lait), la caséine, les sels de caséine et le WPC (concentré de protéine du sérum), et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
où le rapport entre la matière grasse et la protéine (F/P) est compris entre 0,33 et 3,0, et la matière grasse est conjuguée à la protéine

4. Lait délactosé selon la revendication 3, dans lequel ledit lait délactosé se présente sous forme d'une poudre.

5. Produits alimentaires utilisant du lait délactosé et/ou de la poudre de lait délactosé, comprenant
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP, le MPC, la caséine, les sels de caséine et le WPC ; et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
où le rapport entre la matière grasse et la protéine (F/F) est compris entre 0,33 et 3,0, et la matière grasse est conjuguée à la protéine

6. Produits alimentaires selon la revendication 5, dans lesquels lesdits produits alimentaires sont sans sucre.

7. Produits alimentaires selon la revendication 5 ou 6, dans lesquels lesdits produits alimentaires sont le chocolat, de préférence le chocolat au lait.

8. Produits alimentaires selon la revendication 5, dans lesquels lesdits produits alimentaires sont le chocolat au lait sans sucre qui contient comme édulcorant un ou plusieurs alcools de sucre choisis dans le groupe constitué par le lactitol, l'isomaltitol et le maltitol, et dans lesquels de préférence lesdits produits alimentaires contiennent un ou plusieurs composés choisis dans le groupe constitué par le polydextrose, l'inuline, la dextrine indigeste et le sorbitol.

9. Chocolat sans sucre utilisant du lait délactosé et/ou de la poudre de lait délactosé contenant de l'érythritol et/ou du xylitol, comprenant :
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP, le MPC, la caséine, les sels de caséine et le WPC ; et
où le rapport entre la matière grasse et la protéine (F/F) est compris entre 0,33 et 3,0, et la matière grasse est conjuguée à la protéine.

10. Chocolat sans sucre selon la revendication 9, dans lequel ledit lait délactosé et/ou ladite poudre de lait délactosé contiennent en outre un agent de charge constitué d'une fibre alimentaire soluble et/ou d'un alcool de sucre selon un rapport maximal en poids allant jusqu'à 2,5 par rapport à l'extrait sec total de la matière grasse et de la protéine, ledit agent de charge comprenant de préférence une ou plusieurs fibres alimentaires solubles et/ou alcools de sucre choisis dans le groupe constitué par le polydextrose, l'inuline, la dextrine indigeste, le lactitol, le maltitol, l'isomaltitol.

11. Lait délactosé, qui comprend :
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP, le MPC, la caséine, les sels de caséine et le WPC ; et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
où le rapport entre la matière grasse et la protéine (F/P) est compris entre 0,33 et 3,0, et ladite matière grasse et ladite protéine sont homogénéisées dans une solution aqueuse, et en outre la matière grasse est conjuguée à la protéine de façon à former une structure en émulsion stable de type aqueux.

12. Lait délactosé selon la revendication 11, dans lequel ledit lait délactosé se présente sous forme d'une poudre.

13. Produits alimentaires utilisant du lait délactosé et/ou de la poudre de lait délactosé, comprenant :
(a) une matière grasse comprenant une ou plusieurs matières grasses du lait, choisies dans le groupe constitué par la crème fraîche, le beurre et l'huile de beurre, et ayant une teneur en lactose inférieure à 2 %,
(b) une protéine comprenant une ou plusieurs protéines du lait, choisies dans le groupe constitué par la TMP, le MPC, la caséine, les sels de caséine et le WPC ; et
(c) un agent de charge, constitué d'une fibre alimentaire soluble et/ou d'un alcool de sucre selon un rapport maximal en poids allant jusqu'à 2,5 par rapport à l'extrait sec total de la protéine et de la matière grasse, ledit agent de charge étant de préférence constitué d'une ou plusieurs fibres alimentaires solubles et/ou alcools de sucre choisis dans le groupe constitué par le polydextrose, l'inuline, la dextrine indigeste, le lactitol, le maltitol, l'isomaltitol et l'érythritol,
où le rapport entre la matière grasse et la protéine (F/P) est compris entre 0,33 et 3,0, et ladite matière grasse et ladite protéine sont homogénéisés dans une solution aqueuse, et en outre la matière grasse est conjuguée à la protéine de façon à former une structure en émulsion stable de type aqueux.

14. Produits alimentaires selon la revendication 13, dans lesquels les produits alimentaires sont sans sucre.
